# EUROPÄISCHE PATENTSCHRIFT

(11) **EP 1 276 320 B1**
(45) Veröffentlichungstag und Bekanntmachung des Hinweises auf die Patenterteilung: **27.05.2015**
(21) Anmeldenummer: 01114472.2
(22) Anmeldetag: 15.06.2001
(51) Int. Cl.: H04N 7/167

(54) **Verfahren zur Unkenntlichmachung und Wiederherstellung von Bildinhalten**
Method for making unrecognisable and for restoring image content
Méthode pour rendre inidentifiable et pour restorer le contenu d'une image

(43) Veröffentlichungstag der Anmeldung: 15.01.2003
(73) Patentinhaber: L-1 Identity Solutions AG, 44801 Bochum (DE)
(72) Erfinder: Gehlen,Stefan Dr., 44869 Bochum (DE); Von Der Malsburg,Christof,Prof.Dr., 44799 Bochum (DE); Clasen,Martin, 44801 Bochum (DE); Brauckmann,Michael,Dr., 58456 Witten (DE); Werner,Martin,Dr., 58675 Hemer (DE)
(74) Vertreter: Grünecker Patent- und Rechtsanwälte PartG mbB

(56) Entgegenhaltungen:
- EP-A- 1 079 627
- EP-A2- 0 893 920
- WO-A-00/16243
- US-A- 6 067 399
- "Preprocessing and Postprocessing - Segmentation for VOP Generation" ISO/IEC JTC1/SC29/WG11 - N1902 - ANNEX F, Oktober 1997 (1997-10), Seiten 284-288, XP002181872 Fribourg - CH

## Beschreibung

### Gebiet der Erfindung

Die Erfindung betrifft ein automatisches Verfahren zum reversiblen Unkenntlichmachen von Objekten in stehenden und bewegten Bildern, insbesondere von Personen und Gesichtern, sowie ein Verfahren zur Widerherstellung ausgewählter unkenntlich gemachter Objekte.

### Stand der Technik

Das Unkenntlichmachen von Gesichtern oder anderen Objekten, z.B. Autokennzeichen, in Bildern erfolgt in der Regel aus Gründen des Datenschutzes und ist deswegen meist zwingend notwendig. Herkömmliche Verfahren zur Durchführung des Unkenntlichmachen sind aber oft sehr zeitaufwendig und erfordern in vielen Fällen wegen manuellen Kontrolleingriffen eine Bedienperson.

Für stehende Bilder existiert ein Verfahren zur Unkenntlichmachung von Gesichtern, bei dem die Gesichter automatisch erkannt und schwarz gefärbt werden. Das Verfahren ist irreversibel, da die ursprüngliche Information gelöscht wird. Eine Rekonstruktion der Gesichter (oder ausgewählter Gesichter) ist somit bei diesem Verfahren weder vorgesehen noch möglich.

Ein Beispiel für das oben beschriebene Verfahren ist das automatische Unkenntlichmachen der Gesichter von Beifahrern auf Bildern, die bei Geschwindigkeitskontrollen aufgenommen werden. Zum Schutz der Privatsphäre werden die Originale durch eine Ausleseeinrichtung (z.B. Scanner) eingelesen und anschließend vernichtet. In den eingelesenen Bildern werden die Gesichter von Beifahrern durch Schwärzung unkenntlich gemacht, wobei die Bildinformation der entsprechenden Bildbereiche auf irreversible Weise zerstört wird.

Bei bewegten Bildern (z.B. Videobildern) sind verschiedene Verfahren bekannt, die mit Erkennen von Objekten oder Unkenntlichmachen von Bildern oder Objekten in Bildern in Bezug stehen.

Das vollständige Unkenntlichmachen des Bildinhaltes ist z.B. bei sogenannten Pay-TV Programmen realisiert, bei denen das übertragene Videosignal mit einem bestimmten Kode verschlüsselt wird. Das Verfahren ist reversibel, wobei der ursprüngliche Bildinhalt von solchen Empfangseinrichtungen wiederhergestellt werden kann, die eine entsprechende Dekodiereinrichtung aufweisen.

Zum Schutz der Privatsphäre von Personen gibt es femer halbautomatische Verfahren, um die Gesichter der betreffenden Personen in Videobildern unkenntlich zu machen. Bei diesem Verfahren werden anfänglich (d.h. am Beginn der Videosequenz) die Gesichtsbereiche durch eine Bedienperson manuell markiert, worauf eine Detektionseinrichtung die zugehörigen Markierungen bzw. Objektkanten ermittelt. In den nachfolgenden Bildern werden diese Kanten verwendet, um den entsprechenden Bildbereich automatisch zu verfolgen, wobei die Bedienperson gegebenenfalls Korrekturen durchführen muss. Bei diesen Verfahren ist das Unkenntlichmachen ebenfalls irreversibel, d.h. eine nachträgliche Wiederherstellung ist nicht vorgesehen.

Es gibt zur Zeit kein Verfahren, das sowohl auf stehende als auch auf bewegte Bilder anwendbar und in der Lage ist, Objekte in den Bildern automatisch zu erkennen und den entsprechenden Bildinhalt durch Verschlüsselung unkenntlich zu machen.

Insbesondere existiert kein Verfahren, welches es autorisierten Stellen ermöglicht, nachträglich aus den mit herkömmlichen Verfahren bearbeiteten Bildern den unkenntlich gemachten Bildinhalt (teilweise oder vollständig) wiederherzustellen.

Dokument EP 0 893 920 A2 offenbart ein Verfahren zum reversiblen Unkenntlichmachen wenigstens eines Objekts in einem Bild, mit den Schritten: Erfassen jedes unkenntlich zu machenden Objekts in einem Originalbild, Erzeugen wenigstens eines Datensatzes, welcher umfasst: Bildinformation zur Darstellung des Bildes, in welchem jedes unkenntlich zu machende Objekt unkenntlich gemacht ist, und Zusatzinformation, um jedes in dem Bild unkenntlich gemachte Objekt wiederherstellen zu können.

### Beschreibung der Erfindung

Demzufolge ist es eine Aufgabe der Erfindung, ein reversibles Verfahren zu Bearbeitung von Bildern bereitzustellen, um Objekte in stehenden oder bewegten Bildern automatisch zu erkennen und den entsprechenden Bildinhalt durch Verschlüsselung unkenntlich zu machen.

Diese Aufgabe wird durch das im Anspruch 1 beschriebene Verfahren gelöst.

Demgemäß stellt die Erfindung ein Verfahren zum reversiblen Unkenntlichmachen wenigstens eines Objekts in einem Bild bereit, dass die folgenden Schritte umfasst: automatisches Erfassen jedes unkenntlich zu machenden Objekts in einem Originalbild, Erzeugen wenigstens eines Datensatzes, der die Bildinformation zur Darstellung des Bildes, in welchem jedes unkenntlich zu machende Objekt unkenntlich gemacht ist, und die Zusatzinformation, um jedes in dem Bild unkenntlich gemachte Objekt wiederherstellen zu können, umfasst.

Ohne spezielle Berechtigung (Autorisierung) steht dabei nur der Datensatz zur Verfügung oder ist nur der Teil des Datensatzes verwertbar, der zur Darstellung des teilweise unkenntlich gemachten Bildes benötigt wird. Bei dem Bild kann es sich z.B. um eine durch eine Überwachungskamera aufgenommene Szene handeln, in der aus Gründen des Datenschutzes das Gesicht einer bestimmten Person oder aller Personen unkenntlich gemacht sein müssen.

Eine Wiederherstellung des Gesichts einer ausgewählten Person oder aller Personen, z.B. zum Zwecke der Strafverfolgung, ist ausschließlich dann möglich, wenn auch die Zusatzinformation zur Verfügung steht, sei es, dass der die Zusatzinformation umfassende Datensatz bereitgestellt wird oder dass die im Datensatz versteckte Zusatzinformation verwertbar gemacht wird.

Das automatischen Erkennen von Objekten (Gesichtern) in Bildern erfolgt bevorzugt durch in der Technik bekannte Verfahren, die auf der Verwendung neuronaler Netze oder anderer statistischer Verfahren basieren, oder auf der Verwendung von Modellen in der Form elastischer Graphen.

In einer bevorzugte Weiterbildung des oben beschriebenen erfindungsgemäßen Verfahrens wird aus den Originaldaten genau ein Datensatz erzeugt, der die Bildinformation und die Zusatzinformation umfasst.

Dies ermöglicht eine einfache Speicherung der bearbeiteten Bilddaten und, im Falle einer erforderlichen Wiederherstellung, eine problemlose Zuordnung von Bild- und Zusatzinformation. Ferner erlaubt diese Weiterbildung auch eine Bildübertragung mit herkömmlichen Vorrichtungen. Die Zusatzinformation entspricht einem Teil des Datensatzes, ist aber derart innerhalb des gesamten Datensatzes versteckt, dass die Zusatzinformation im Normalfall nicht als solche erkannt und verwertet werden kann.

Derartige Verfahren, nach denen Information in sichtbaren Bildern versteckt werden kann, sind in der Technik hinlänglich beschrieben und bedürfen hier keiner weiteren Erläuterung.

Falls höhere Sicherheitsstandards erforderlich sind, wird eine alternative Weiterbildung des erfindungsgemäßen Verfahrens bevorzugt, gemäß der wenigstens zwei Datensätze erzeugt werden, wobei ein erster Datensatz die Bildinformation und ein zweiter Datensatz die Zusatzinformation umfasst.

Hier steht nicht autorisierten Personen nur der erste Datensatz zur Verfügung, während auf den zweiten Datensatz, der separat gespeichert und/oder übertragen werden kann, nur nach einer speziellen Autorisierung zugegriffen werden kann. Ohne diesen zweiten Datensatz ist eine Wiederherstellung des unkenntlich gemachten Bildinhalts prinzipiell unmöglich. Anschaulich entspricht das durch diese Weiterbildung teilweise unkenntlich gemachte Bild einem Bild, aus welchem die unkenntlich gemachten Bereiche ausgeschnitten werden, wobei die ausgeschnittenen Teile mit der zugehörigen, für eine eventuelle Wiederherstellung notwendigen Ortsinformation an einem separaten und zugriffsgeschützten Ort aufbewahrt werden.

In einer besonders bevorzugten Weiterbildung des Verfahrens wird jedes in einem Bild unkenntlich zu machende Objekt mit demselben Schlüssel unkenntlich gemacht.

Als Schlüssel wird die Vorschrift bezeichnet, nach der ein Bildbereich unkenntlich gemacht wird, sowie deren Umkehrung, d.h. die auf Bild- und Zusatzinformation angewandte Vorschrift, gemäß der der unkenntlich gemachte Bildbereich wiederhergestellt werden kann. Der Schlüssel kann Teil des auch die Zusatzinformation aufweisenden Datensatzes sein, aber auch an einen separaten Ort abgelegt sein.

Wenn zum Unkenntlichmachen eines Teilbereichs oder mehrere Bereiche in einem Bild ein einheitlicher Schlüssel verwendet wird, so kann sowohl Verschlüsselung (Unkenntlichmachen) als auch Entschlüsselung (Wiederherstellung) mit Vorrichtungen durchgeführt werden, die - verglichen mit einfacher Bildverarbeitung ohne Verschlüsselung - nur vergleichsweise moderat erhöhte Anforderungen an Rechen-, Speicher- und Übertragungskapazitäten stellen.

Falls höhere Ansprüche an den Schutz der Privatsphäre gestellt werden, steht eine alternative und etwas aufwendigere Weiterbildung des erfindungsgemäßen Verfahrens bereit, nach der wenigstens zwei Objekte mit unterschiedlichen Schlüsseln unkenntlich gemacht werden, im Extremfall sogar jedes Objekt mit einem anderen Schlüssel.

Dadurch besteht die Möglichkeit, dass in einem Bild ausgewählte Objekte selektiv wiederhergestellt werden können, während andere Objekte auch in dem teilweise wiederhergestellten Bild unkenntlich bleiben.

Besonders bevorzugt wird eine Weiterbildung, nach der jedes Objekt einer vorherbestimmbaren Objektklasse automatisch erkannt und unkenntlich gemacht wird.

Wird z.B. bei einer Strafverfolgung eine Person mit bestimmten persönlichen Merkmalen (Haarfarbe, Geschlecht, Hautfarbe, etc.) gesucht, so kann ein durch eine Überwachungskamera aufgenommenes Bild durch geeignet gewählte Schlüssel verschlüsselt und dann teilweise wieder entschlüsselt werden, wobei die Privatsphäre all jener Personen geschützt bleibt, die die genannten Merkmale nicht aufweisen.

Eine weitere Aufgabe der Erfindung ist die Bereitstellung eines Umkehrverfahrens, welches es autorisierten Stellen ermöglicht, den mit den erfindungsgemäßen Verschlüsselungsverfahren unkenntlich gemachten Bildinhalt teilweise oder vollständig wiederherzustellen.

Diese Aufgabe wird durch das im Anspruch 7 beschriebene Verfahren gelöst.

Dieses Verfahren umfasst die Schritte: Auswerten der Zusatzinformation, um eine dem wenigstens einem unkenntlich gemachten Objekt entsprechende wiederhergestellte Teilbildinformation zu erzeugen, und Ersetzen eines entsprechenden Bereichs der Bildinformation durch die wiederhergestellte Teilbildinformation.

Besonders bevorzugt ist ein Verfahren, mit dem in einem Bild mit mehreren unkenntlich gemachten Objekten individuell auswählbare Objekte wiederherstellbar sind.

Dies erlaubt eine selektive Wiederherstellung von bestimmten Objekten, während andere Objekte auch in dem teilweise wiederhergestellten Bild unkenntlich bleiben.

Alternativ kann das Verfahren so ausgebildet sein, dass alle unkenntlich gemachten Objekte mit wenigstens einem vorgegebenen gemeinsamen Merkmal oder dass alle unkenntlich gemachten Objekte wiederhergestellt werden.

Nachfolgend wird die Erfindung anhand von insbesondere für Videobilder bevorzugten beispielhaften Ausführungsformen detailliert beschrieben.

Die unverschlüsselten Bilder werden nachfolgend als Originale oder Originalbilder bezeichnet, während Bilder, in denen wenigstens ein Teilbereich unkenntlich gemacht wurde, als verschlüsselte Bilder bezeichnet werden. Entsprechend werden die aus der Wiederherstellung der unkenntlich gemachten Teilbereiche resultierenden Bilder als wiederhergestellte Bilder bezeichnet.

Das erfindungsgemäße Verfahren erzeugt aus den Originalen bearbeitete Bilder, die durch Verschlüsselung unkenntlich gemachte Teilbereiche aufweisen. Die entsprechenden Daten werden als bearbeitete Bilddaten gespeichert und/oder übertragen. Als "normale Wiedergabe" wird eine solche Wiedergabe bezeichnet, bei der die bearbeiteten Bilder unkenntlich gemachte Teilbereiche in einem ansonsten gewöhnlichen Bild zeigen.

Durch das erfindungsgemäße Verfahren wird der ursprüngliche Informationsgehalt der unkenntlich gemachten Bereiche nicht vernichtet, sondern nur verschlüsselt, wobei verschiedene bevorzugte Arten der Verschlüsselung nachfolgend beschrieben werden.

Die Bilddaten können entweder in analogem oder in digitalem Format vorliegen.

Die bevorzugten Ausführungsformen des erfindungsgemäßen Verfahrens lassen sich zweckmäßigerweise in zwei unterschiedliche Kategorien einteilen:
a) "Chiffrieren": Hierbei wird aus dem Originalbild ein einziger Datensatz erzeugt wird, der sowohl das Abbild mit dem (den) unkenntlich gemachten Bereich(en) umfasst, als auch die zur Wiederherstellung des Bildinhalts erforderliche Information umfasst, letztere aber in einer Form, die ohne Kenntnis der Verschlüsselungsvorschrift nicht verwertbar ist.
b) "Ausschneiden": Hierbei werden aus dem Originalbild wenigstens zwei Datensätze erzeugt werden, von denen einer das Abbild inklusive der unkenntlich gemachten Bereichen repräsentiert, während wenigstens ein zweiter Datensatz die im Abbild fehlende Bildinformation und die zur Wiederherstellung des Originals erforderliche Information umfasst.

### Chiffrieren

In einer ersten bevorzugten Ausführungsform ist das Verfahren so ausgelegt, dass es aus dem Originalbild einen einzigen Datensatz erzeugt, der sowohl das Abbild mit dem (den) unkenntlich gemachten Bereich(en) umfasst, als auch die zur Wiederherstellung des (der) unkenntlich gemachten Bildinhalt(e) erforderliche Information.

Diese Information (Schlüssel) umfasst hierbei keine Bildinhalte, sondern stellt lediglich eine Vorschrift dar, die notwendig ist, um den unkenntlich gemachten Bildinhalt wiederherstellen zu können.

Das Unkenntlichmachen, d.h. die Verschlüsselung eines regional eingegrenzten Bildinhalts kann dadurch erfolgen, dass in den entsprechenden Bildbereichen eine Verwürfelung oder Vertauschung von ganzen Zeilen oder Zeilenabschnitten durchgeführt wird. Solche Verfahren sind z.B. aus der Verschlüsselung von TV Programmen bekannt, werden dort aber auf den gesamten Bildinhalt angewandt. Der zum Wiederherstellen eines unkenntlich gemachten Teilbereichs erforderliche Schlüssel umfasst Information über die Art der Verschlüsselung und die Position des verschlüsselten Bereiches.

Dabei kann sich letztere von Bild zu Bild ändern, da der unkenntlich gemachte Bereich im Allgemeinen ein bewegliches Objekt repräsentiert, dessen Bildposition sich bei einer Folge von Bildern ändern kann.

Der Schlüssel kann unauffällig zusammen mit der das Abbild darstellenden Information in einem das Abbild umgebenden Bildrand oder in Bildrandteilbereichen abgelegt bzw. übertragen oder wiedergegeben werden.

In einer für herkömmliche Bildübertragungen besonders bevorzugten Ausführungsform erfolgt die Übertragung des Schlüssels in den an einer Bildschirm nicht sichtbar werdenden Zeilen am Bildanfang, die z.B. auch für Videotextübertragung Verwendung finden.

Speziell für digitale Daten existieren verschiedene Verschlüsselungsmethoden, die es erlauben, die zur Wiederherstellung erforderliche Information geschützt vor unautorisiertem Auslesen innerhalb eines einzigen Datensatzes (d.h. zusammen mit dem Abbild) zu speichern oder zu übertragen.

### Ausschneiden

In einer zweiten bevorzugten Ausführungsform ist das Verfahren so ausgelegt, dass es aus dem Originalbild wenigstens zwei separate Datensätze erzeugt: einen ersten für das Abbild mit den unkenntlich gemachten Bereichen, und wenigstens einen weiteren, der die Bilddaten von im Abbild unkenntlich gemachten Bereichen (Zusatzinformation) sowie die zur Wiederherstellung des Originals erforderliche Information (Schlüssel) umfasst.

Anschaulich entspricht dieses Verfahren einem Ausschneiden von unkenntlich zu machender Bildinformation aus dem Original und einem versteckten Ablegen der ausgeschnittenen Teile.

Die separaten Datensätze werden getrennt abgelegt und können über separate Kanäle übertragen werden, wobei eine "normale" Wiedergabe nur den ersten Datensatz verwendet.

Es ist dabei zweckmäßig, zwei Fälle getrennt zu betrachten:
i) Handhabung der Bilddaten (d.h. jede Art von Bildverarbeitung wie Verschlüsselung/Speicherung/Übertragung/Wiedergabe) ohne Informationsverlust durch Datenkompression, und
ii) Handhabung der Bilddaten unter Inkaufnahme von Informationsverlust durch Datenkompression.

Der erste Fall (i) ist für analoge und digitale Daten gleichermaßen anwendbar: Der unkenntlich gemachte Bildinhalt wird als kodierter oder unkodierter Datensatz über einen separaten Kanal übertragen oder an einem separaten Speicherplatz gespeichert. Ohne diesen Datensatz ist es unmöglich, den unkenntlich gemachten Bildinhalt wiederherzustellen. Der Schlüssel dient für die korrekte Zuordnung von Bild- und Zusatzinformation.

Ferner kann der Schlüssel zur Kodierung und Dekodierung der in der Zusatzinformation niedergelegten Bilddaten verwendet werden.

Der zweite Fall (ii) findet besonders bei digitalen Bilddaten vorteilhafte Anwendungsbereiche, da auf diesem Gebiet zahlreiche Verfahren der verlustbehafteten Datenkompression im Einsatz sind.

Das digitale Dekodierverfahren ist gegen die durch die Kompression entstehenden Veränderungen unempfindlich auszulegen. Solche Veränderungen können auch als Störungen/Fehler aufgefasst werden, so dass bevorzugt auf fehlerkorrigierende Verfahren (sog. error correction codes) zurückgegriffen werden kann, die z.B. bei der Fehlerkorrektur von CDs Verwendung finden.

Ähnliche Verfahren werden auch dazu verwendet, um bei der Satellitenübertragung von Bildern Kanalstörungen zu kompensieren.

Diesen fehlerkorrigierenden Kodes ist das Verfahren zur Unkenntlichmachung des Bildinhalts voranzustellen, da die fehlerkorrigierenden Kodes nicht dem Zugriffsschutz dienen, sondern nur eine möglichst störunanfällige Übertragung gewährleisten sollen.

## Patentansprüche

1. Ein Verfahren zum reversiblen Unkenntlichmachen wenigstens eines Objekts in einem Bild durch Verschlüsselung, mit den Schritten:
automatisches Erfassen jedes unkenntlich zu machenden Objekts in einem Originalbild,
Erzeugen wenigstens eines Datensatzes, welcher umfasst:
Bildinformation zur Darstellung des Bildes, in welchem jedes unkenntlich zu machende Objekt unkenntlich gemacht ist, und
Zusatzinformation, um jedes in dem Bild unkenntlich gemachte Objekt durch Entschlüsselung wiederherstellen zu können;
wobei die Zusatzinformation wenigstens einen Schlüssel zum Wiederherstellen des wenigstens einen unkenntlich gemachten Objekts umfasst.

2. Ein Verfahren nach Anspruch 1, in welchem ein Datensatz erzeugt wird, der die Bildinformation und die Zusatzinformation umfasst.

3. Ein Verfahren nach Anspruch 1, in welchem wenigstens zwei Datensätze erzeugt werden, wobei ein erster Datensatz die Bildinformation und ein zweiter Datensatz die Zusatzinformation umfasst.

4. Ein Verfahren nach einem der vorangegangenen Ansprüche, in welchem jedes Objekt mit demselben Schlüssel unkenntlich gemacht wird.

5. Ein Verfahren nach einem der Ansprüche 1 bis 3, in welchem wenigstens zwei Objekte mit unterschiedlichen Schlüsseln unkenntlich gemacht werden.

6. Ein Verfahren nach einem der vorangegangenen Ansprüche, in welchem jedes Objekt einer vorherbestimmbaren Objektklasse automatisch erkannt und unkenntlich gemacht wird.

7. Ein Verfahren zur Wiederherstellung wenigstens eines nach einem Verfahren gemäß den Ansprüchen 1 bis 6 unkenntlich gemachten Objekts in einem Bild, mit den Schritten:
Auswerten der Zusatzinformation, um eine dem wenigstens einem unkenntlich gemachten Objekt entsprechende wiederhergestellte Teilbildinformation zu erzeugen,
Ersetzen eines entsprechenden Bereichs der Bildinformation durch die wiederhergestellte Teilbildinformation.

8. Ein Verfahren nach Anspruch 7, mit welchem in einem Bild mit mehreren unkenntlich gemachten Objekten individuell auswählbare Objekte wiederhergestellt werden.

9. Ein Verfahren nach Anspruch 7 oder 8, mit welchem alle unkenntlich gemachten Objekte mit wenigstens einem vorgegebenen gemeinsamen Merkmal wiederhergestellt werden.

10. Ein Verfahren nach Anspruch 7, mit welchem alle unkenntlich gemachten Objekte wiederhergestellt werden.

## Claims

1. A method for reversibly rendering at least one object in an image unrecognizable by encryption, comprising the steps of:
automatically detecting any object to be rendered unrecognizable in an original image,
generating at least one data set comprising:
image information for representation of the image in which each object to be rendered unrecognizable is in fact rendered unrecognizable, and
additional information to be able to restore each object rendered unrecognizable in the image by decryption;
wherein the additional information comprises at least one code for restoring the at least one object rendered unrecognizable.

2. A method according to Claim 1 in which a data set is generated comprising the image information and the additional information.

3. A method according to Claim 1 in which at least two data sets are generated, whereby a first data set comprises the image information and a second data set comprises the additional information.

4. A method according to one of the previous claims in which each object is rendered unrecognizable with the same code.

5. A method according to one of the Claims 1 to 3 in which at least two objects are rendered unrecognizable with different codes.

6. A method according to one of the previous claims in which each object of a previously determined object class is automatically detected and rendered unrecognizable.

7. A method to restore at least one object rendered unrecognizable in an image according to a method according to Claims 1 to 6, comprising the steps of:
evaluating the additional information in order to generate a restored partial image information corresponding to the at least one object rendered unrecognizable,
replacing a corresponding area of the image information by the restored partial image information.

8. A method according to Claim 7 with which, in an image with several objects rendered unrecognizable, individually selectable objects are restored.

9. A method according to Claim 7 or 8 with which all objects rendered unrecognizable are restored with at least one specified common characteristic.

10. A method according to Claim 7 with which all objects rendered unrecognizable are restored.

## Revendications

1. Un procédé pour rendre non identifiable, de façon réversible, au moins un objet dans une image, par cryptage, comprenant les étapes suivantes :
relevé automatique de chaque objet à rendre non identifiable dans une image originale,
production d'un jeu de données, qui comprend :
une information d'image pour la représentation de l'image, dans laquelle chaque objet à rendre non identifiable a été rendu non identifiable, et
une information additionnelle en vue de pouvoir restaurer, par décryptage, chaque objet rendu non identifiable dans l'image,
l'information additionnelle comprenant au moins une clé pour restaurer ledit au moins un objet ayant été rendu non identifiable.

2. Un procédé selon la revendication 1, d'après lequel on produit un jeu de données, qui comprend l'information d'image et l'information additionnelle.

3. Un procédé selon la revendication 1, d'après lequel on produit au moins deux jeux de données, un premier jeu de données comprenant l'information d'image, et un deuxième jeu de données l'information additionnelle.

4. Un procédé selon l'une des revendications précédentes, d'après lequel chaque objet est rendu non identifiable à l'aide de la même clé.

5. Un procédé selon l'une des revendications 1 à 3, d'après lequel au moins deux objets sont rendus non identifiables avec des clés différentes.

6. Un procédé selon l'une des revendications précédentes, d'après lequel chaque objet d'une classe d'objets pouvant être prédéterminée, est automatiquement détecté et rendu non identifiable.

7. Un procédé pour restaurer au moins un objet ayant été rendu non identifiable dans une image grâce à un procédé selon les revendications 1 à 6, comprenant les étapes suivantes :
traitement de l'information additionnelle, en vue de produire une information d'image partielle correspondant au dit au moins un objet rendu non identifiable,
remplacement d'une zone correspondante de l'information d'image, par l'information d'image partielle restaurée.

8. Un procédé selon la revendication 7, d'après lequel dans une image avec plusieurs objets rendus non identifiables, on restaure des objets pouvant être sélectionnés individuellement.

9. Un procédé selon la revendication 7 ou la revendication 8, d'après lequel on restaure tous les objets ayant été rendus non identifiables, qui présentent une caractéristique prédéterminée commune.

10. Un procédé selon la revendication 7, d'après lequel tous les objets ayant été rendus non identifiables sont restaurés.
